# FASCICULE DE BREVET EUROPEEN

(11) **EP 1 317 732 B1**
(45) Date de publication et mention de la délivrance du brevet: **03.11.2004**
(21) Numéro de dépôt: 01963338.7
(22) Date de dépôt: 13.09.2001
(51) Int. Cl.: G06K 19/07

(54) **CARTE MULTIPORTS**
MULTIPORTKARTE
MULTIPORT CARD

(30) Priorité: 15.09.2000 CH 180000
(43) Date de publication de la demande: 11.06.2003
(73) Titulaire: NagraCard SA, 1033 Cheseaux-sur-Lausanne (CH)
(72) Inventeur: HILL, Michael, John, CH-1296 Coppet (CH)
(74) Mandataire: Wenger, Joel-Théophile
(86) Numéro de dépôt international: PCT/IB2001/001669
(87) Numéro de publication internationale: WO 2002/023472

(56) Documents cités:
- EP-A- 0 471 373
- US-A- 5 029 207
- US-A- 6 035 037

## Description

Cette invention concerne le domaine des cartes à puces, en particulier les cartes à puces de type ISO 7816.

Ces cartes se présentent sous la forme d'un module compact comprenant un grand nombre d'éléments électroniques tels que mémoires, microprocesseurs, modem. La technologie avançant rapidement, les performances hier réservées aux systèmes volumineux sont désormais disponibles dans des cartes à puces.

La norme ISO 7816 définit l'interfaçage d'une telle carte qui s'effectue par le biais d'une rosace de 8 contacts dont les fonctions sont définies par la norme.

La conception d'une telle carte a été dictée par le besoin de disposer de supports de données portables et offrant une grande sécurité quant à la protection de ces données. Néanmoins de par leurs structures, ils sont destinés à des applications de stockage et de traitement nécessitant peu d'entrées-sorties. En effet, selon la norme ISO 7816, seul une connexion est utilisée pour cette fonction dans un mode bidirectionnelle en mode semi-duplex.

Ainsi, l'évolution de ces cartes est bridée par cette structure réservant leurs utilisations à des applications de contrôle alors que le traitement rapide des données est effectué dans d'autres unités.

Ceci est particulièrement de cas dans la télévision à péage pour laquelle les signaux sont encryptés par une clé variant au fil du temps. Dans le flux de données audio/vidéo arrivant au décodeur, des messages d'administration sont ajoutés (EMM) qui contiennent les clés sous formes encryptées. Lorsqu'un tel message est reconnu, il est dirigé vers la carte à puce servant de module de sécurité.

Dans cette application, la carte à puce contient les différentes clés qui permettent de décrypter ces messages et de vérifier si l'abonné dispose des droits suffisants pour la visualisation des données. Dans l'affirmative, la carte renvoie des informations permettant au décodeur de décrypter les données encryptées.

Cette méthode souffre de plusieurs inconvénients. Le premier est de devoir fournir les clés en clair à un décodeur qui n'est pas considéré comme un élément de sécurité. C'est d'ailleurs la raison pour laquelle les clés sont changées à intervalle régulier, typiquement toutes les secondes. Cette structure, bien que satisfaisante à de nombreux égards, pose un réel problème dans d'autres applications par exemple pour le cas du stockage de données. Dans ce type d'application, la notion de durée de validité d'une clé disparaît et l'on associe aux données cryptées, une clé que seule la carte à puce peut décrypter.

On comprend bien que le fait de fournir la clé au décodeur, un ordinateur dans cet exemple, constitue un risque que cette dernière soie interceptée par un tiers et divulguée sans contrôle.

Afin de pallier ce problème, une solution possible est de décrypter les données directement dans la carte à puce. Ainsi la clé de décryptage ne sort pas de la carte, cette dé étant utilisée directement dans la carte pour traiter les données encryptées.

Ce type d'utilisation se heurte rapidement aux contraintes physiques de la carte ISO 7816 dont le port I/O a un taux de transfert de l'ordre de 10 à 100 Kbits/s.

Ce même type de problème se pose lors de l'utilisation d'une carte sans contact du type ISO 14443. Les taux de transfert étant de l'ordre de 106 à 425 kBits/s.

Toute modification structurelle de la carte se voit confrontée à un problème de comptabilité avec les lecteurs ISO 7816 et ISO 14443 qui ne comprendraient pas cette nouvelle spécification.

Le document US6035037 décrit une carte à puce comportant une rosace de huit contacts de type ISO 7816 et comprenant un module de décryptage, un processeur ou unité centrale relié à un premier bus, au moins une voie bidirectionnelle standard et un canal série à haute vitesse relié à des contacts non utilisés par la voie bidirectionnelle standard. Le canal série à haute vitesse est connecté à un deuxième bus. Le module de décryptage comprend une pluralité de modules d'encryptage / décryptage reliés par le deuxième bus. Ces modules d'encryptage / décryptage sont également reliés au processeur par le premier bus.

Le but de l'invention est de disposer d'une carte à puce respectant la comptabilité avec les lecteurs existants et proposant d'autres services en particulier la possibilité de décrypter les données à l'intérieur de la carte, à la vitesse imposée par le débit des données.

Ce but est atteint par une carte à puce comportant une rosace de huit contacts selon la norme ISO 7816 et comprenant une unité centrale reliée à un premier bus, au moins une voie bidirectionnelle standard, un canal série à haute vitesse relié à des contacts non utilisés par la voie bidirectionnelle standard, ledit canal série à haute vitesse étant connecté à un deuxième bus, une pluralité de modules d'encryptage/décryptage reliés par le deuxième bus, lesdits modules d'encryptage/décryptage étant également reliés au premier bus à l'unité centrale, caractérisée en ce qu'elle comprend un module de multiplexage reliant lesdits modules d'encryptage/décryptage au canal série à haute vitesse, ledit module de multiplexage étant relié au deuxième bus et au premier bus.

Par contacts non utilisés, on entend des connexions qui n'ont pas de fonctions particulières dans la norme ou des connexions qui ne sont plus utilisées dans les générations de cartes actuelles.

Dans cette catégorie, on trouve bien entendu les deux connexions RFU ("Reserved for future use") ainsi que la connexion "Vpp" qui permettait d'alimenter les mémoires non volatiles en tension supérieure à 5V (généralement de 12V à 21V). Avec l'avènement des nouvelles technologies de mémoires non volatiles tels que NVRAM, EEPROM ou FLASH, cette tension est générée par la puce elle-même et cette connexion n'est plus utilisée de nos jours.

Grâce à l'utilisation de ces lignes supplémentaires, il est possible de définir un protocole différent de ceux utilisés dans la norme ISO 7816 et ouvre ainsi le champ à d'autres applications.

Les trois connexions disponibles permettent une liaison à haute vitesse grâce à une ligne horloge (CLK), une ligne entrée (IN) et une ligne sortie (OUT). Il est possible d'utiliser conjointement les différentes voies d'accès à la carte, par exemple par le canal standard fonctionnant en bidirectionnel par une ligne I/O. Ce canal haute vitesse vient ajouter des fonctionnalités à celles déjà existantes, par exemple un module d'encryptage décryptage à haute vitesse.

L'utilisation de ce canal à haute vitesse a des conséquences sur l'architecture de la carte. Il est désormais possible de proposer un module de décryptage (ou encryptage) qui est entièrement effectué dans la carte. Pour cela, les données arrivant par le canal rapide sont acheminées vers un module spécialisé de décryptage. En effet, ces données n'ont pas nécessairement besoin de transiter par le microprocesseur mais peuvent être directement acheminées au module spécialisé de décryptage par un bus rapide interne.

A cet effet, la carte à puce selon l'invention comprend des moyens de multiplexage permettant un accès direct entre le canal rapide et un ou des modules spécialisés. Ces moyens permettent également de diriger le flux du canal rapide vers le microprocesseur si besoin. Si certains microprocesseurs ne peuvent traiter des données à des débits de plusieurs mégabits/secondes, d'autres versions plus évoluées rendent ce traitement possible et peuvent remplacer certains modules spécialisés. Dès lors, le microprocesseur, par logiciel (programmable), pourra se substituer aux modules spécialisés effectuant des opérations mathématiques grâce à des circuits électroniques (non programmables).

Selon l'invention, les moyens de multiplexage permettent de mettre en série plusieurs modules spécialisés. La carte selon l'invention peut comprendre un premier module de compression de données dont la sortie est dirigée vers un module de cryptage.

Lors du traitement de données par le biais du canal rapide, les autres moyens de communication restent disponibles, en particulier la liaison I/O décrite dans la norme ISO 7816 ou la liaison sans contact du type ISO 14443. Il est ainsi possible de transférer les informations de contrôle par ces moyens, lesdites informations servant à la transmission des informations de gestion de la carte tels que par exemple les paramètres des modules de décryptage ou les droits attachés à ces paramètres.

Selon l'invention, les moyens de multiplexage comprennent des moyens d'extraction et d'injection afin de séparer certains type de données du flux de données. Un flux de données numériques destiné à la télévision à péage comprend des données utiles tels qu'audio ou vidéo et des données de contrôle. Lorsque ce flux est dirigé sur le canal rapide, il faut en extraire les données de contrôle qui contiennent les informations sur les clés de décryptage ainsi que diverses informations de gestion.

Ce module d'extraction et d'injection est paramétré par le microprocesseur et lorsqu'un message correspond aux critères de reconnaissance, ce message est aiguillé vers le microprocesseur.

Les données traitées par une telle carte sont généralement organisées en blocs. Chaque bloc débute par un identificateur de bloc et décrivant le type d'information contenu dans ledit bloc.

Dans la fonction inverse, c'est-à-dire d'encryptage de données, ce module peut insérer des données de contrôle dans le flux arrivant du bus rapide. Ces données de contrôle sont générées par l'unité centrale pour, par exemple, qualifier le flux de données, transmettre les mots de contrôle sous forme encryptées ou transmettre des informations de routage. A cet effet, ce module comprend une mémoire tampon recevant les blocs de données provenant du bus rapide et les blocs de données provenant de l'unité centrale. Si la mémoire tampon contient un bloc de données de contrôle, il est inséré dans le flux à la fin d'un bloc de données venant du bus rapide. Ce flux est ensuite transmis vers le module de mise en forme pour être acheminé vers le port de sortie rapide.

Grâce à cette structure, il est ainsi possible de traiter tout le flux dans la carte à puce, augmentant de ce fait grandement la sécurité des données. Il est ainsi possible de créer un flux complet de données encryptées ou décryptées dans la carte incluant les informations de gestion tels que les mots de contrôle.

Selon une forme de l'invention, le canal rapide répond aux normes USB (Universal Serial Bus). La particularité de cet interface est que les signaux utilisent deux connexions, une pour les données entrantes (IN) et l'autre pour les données sortantes (OUT).

La carte à puce selon l'invention comprend un module de détection de protocole qui lui permet de s'adapter au protocole USB et le convertit dans le protocole interne de la carte à puce, par exemple en régénérant l'horloge.

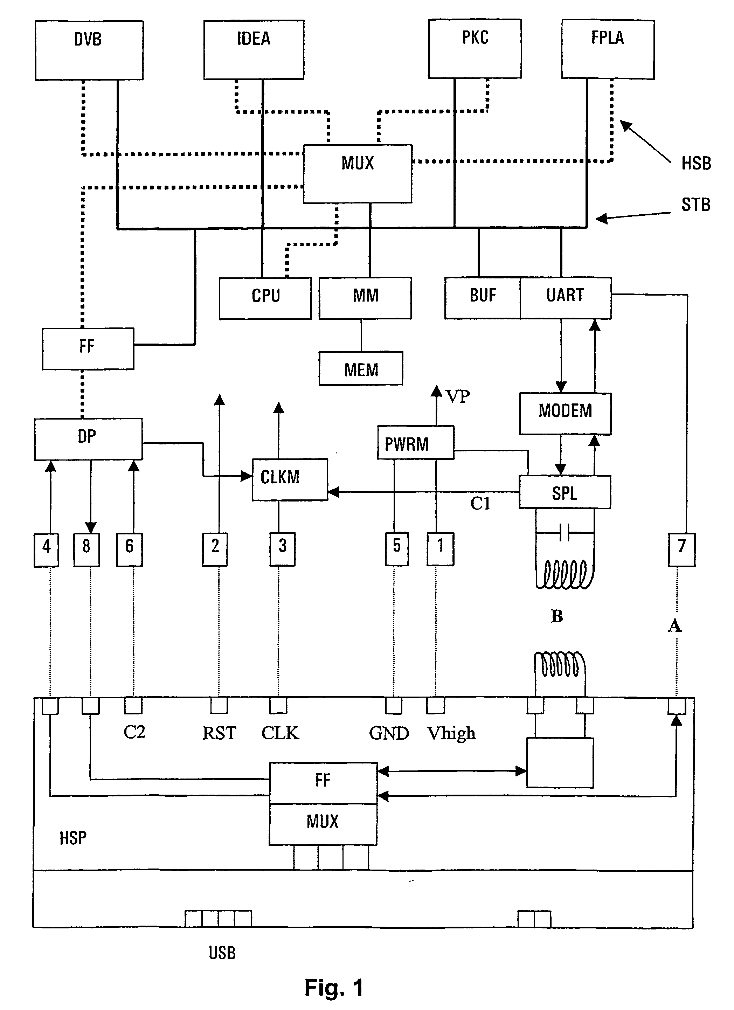

La présente invention sera comprise plus en détail grâce au dessin annexé, pris à titre non limitatif, dont la figure unique représente l'architecture d'une carte à puce et son lecteur selon l'invention.

Sur cette figure, il est représenté les deux types de liaison de l'état de la technique, à savoir la liaison galvanique (A) et la liaison sans contact (B). Bien que généralement les cartes connues ne comprennent qu'une seule de ces liaisons, il est possible que pour des raisons de comptabilité, une telle carte soit produite.

La liaison I/O (A) est dirigée vers un UART (Universal Asynchronous Receiver Transmitter) qui est couplé avec une mémoire tampon (BUF). Les signaux arrivant dans l'UART sont mis en forme et filtré afin d'éliminer les bruits et autres interférences. La mémoire tampon (BUF) sert à mémoriser les données entrantes avant qu'elles de soient traitées par le microprocesseur.

Un traitement similaire est effectué par la voie sans contact (B). Les signaux émis par le lecteur servent en même temps d'alimentation à la carte. C'est pourquoi l'antenne de la carte (20) à une quadruple fonction: transmettre et recevoir les données entre la carte et le lecteur, fournir le signal d'horloge, et alimenter la carte. Le module d'alimentation (SPL) transforme la porteuse haute-fréquence en une tension utilisable par la carte. En amont de ce module se trouve un module de mise en forme du signal modulé tel qu'un modem.

La tension ainsi obtenue est transmise à un module de gestion d'alimentation PWRM en charge de la sélection de la source d'alimentation, en particulier lorsque plusieurs sources sont disponibles. Dans la forme de réalisation dans laquelle la carte est alimentée galvaniquement par le lecteur, le module de gestion d'alimentation (PWRM) sélectionne prioritairement l'alimentation galvanique provenant du lecteur. Cette alimentation régulée VP est ensuite distribuée aux éléments de la carte.

Les informations décodées par l'UART sont ensuite accessibles sur le bus standard (STB) représenté en ligne grasse sur la figure. Ce bus permet de relier tous les modules entre eux avec comme chef d'orchestre, l'unité centrale (CPU). Pour ses besoins en mémoires, la carte dispose d'un ensemble de mémoire composé d'une mémoire programme (ROM ou NVRAM), d'une mémoire de travail (RAM) et d'une mémoire de sauvegarde (NVRAM). Ces différentes mémoires peuvent êtres gérées par un gestionnaire de mémoire (MM). Ce module comprend également la gestion des droits d'accès aux différentes mémoires.

La carte selon l'invention comprend un deuxième bus rapide (HSB) représenté en pointillé sur la figure. Ce bus HSB peut être de type parallèle ou série et permet des débits de plusieurs mégabits/sec. Les modules connectés sur ce bus le sont également sur le bus standard pour la transmission des initialisations, clés et autres paramétrages. Connectés sur le bus rapide HSB se trouvent des modules d'encryptage/décryptage spécialisés selon les différents protocoles supportés. Il est ainsi prévu des modules du type IDEA, DES, triple-DES, Hash ou AES. De plus, d'autres modules spécialisés tels que des modules de compression ou décompression peuvent être ajoutés selon les besoins.

Un module utilisant la technologie FPLA ("Field Programmable Logic Array") permet de programmer les opérations des futurs algorithmes d'encryption. L'unité centrale CPU peut configurer ce module pour qu'il effectue les opérations nécessaires au décryptage d'informations ou toute autre fonction. Le propre de ce type de module est de disposer de blocs de fonction unitaire (registre à décalage, XOR par exemple) que l'on connecte selon les besoins pour réaliser la fonction complexe de son choix.

Un aspect important de l'invention est représenté par les éléments composant le canal rapide. Un premier module de détection de protocole DP est en charge de la mise en forme des signaux et de reconnaître le protocole utilisé. Les signaux sont convertis selon le protocole interne, par exemple sur un bus série synchrone à trois fils. Ce module est en charge de l'adaptation avec la norme définie pour l'interfaçage extérieur. La détection du protocole se fait automatiquement, par exemple en fonction de la présence à l'absence d'un signal d'horloge ou la fréquence de transmission utilisée.

Une fois les signaux mis en forme selon un protocole connu, les signaux sont acheminés vers le multiplexeur MUX. Ce module permet d'envoyer les signaux au module cible selon les besoins. L'unité centrale CPU peut par exemple, configurer le multiplexeur pour envoyer les signaux du canal rapide vers le module d'encryptage IDEA. Au passage, le module d'extraction et d'injection FF scrute les données et en extrait celles qui répondent aux critères programmés. Lorsque les critères de reconnaissance sont satisfaits, une interruption est générée par le module d'extraction et d'injection FF qui informe l'unité centrale CPU de la disposition de ces données.

Le module de multiplexage MUX peut bien entendu envoyer les données vers l'unité centrale CPU si les capacités de traitement du flux de données sont suffisantes. Il est également possible d'intégrer dans le module MUX une mémoire tampon afin de stocker temporairement les données avant que le module cible puisse les traiter.

Comme décrit plus haut, le module d'extraction et d'injection FF fonctionne dans les deux directions et permet d'insérer les blocs de contrôle vers le canal rapide.

Il est connu que ce type de carte ne dispose pas de générateur d'horloge interne mais est tributaire des signaux d'horloge venant du lecteur. Dans notre cas, nous disposons de trois sources d'horloge possible, soit l'entrée classique CLK selon la norme ISO 7816, l'horloge C1 extraite de la transmission sans contacts et l'horloge accompagnant le bus rapide C2. Le module gestionnaire d'horloge CLKM gère ces différentes sources et s'assure que la carte reçoit des impulsions d'horloge. Ce module comprend également des moyens pour multiplier ou diviser la fréquence selon les besoins. Ce module peut produire plusieurs signaux d'impulsions d'horloge selon les besoins, par exemple une première fréquence pour l'unité centrale CPU et une seconde fréquence pour les modules rapides (DVD, PKC, IDEA... ).

La gestion des différentes sources d'horloge répond à des critères définis en terme de hiérarchie. L'ordre de priorité est généralement la source ISO 7816 (CLK), puis la source ISO 14443 sans contact (C1) et finalement la source du canal rapide (C2).

Cette invention concerne également un lecteur de carte comprenant des moyens pour communiquer par un canal rapide avec une carte à puce.

Ce lecteur doit pouvoir s'adapter à un grand nombre de types de cartes, en particulier de génération différentes. L'interface du lecteur vers l'ordinateur est avantageusement le port USB permettant des transferts rapides de données. Il se peut que la carte à puce ne supporte pas ce protocole et exige une connexions à trois fils (IN,OUT,CLOCK). Dans ce cas, le lecteur comporte un interface permettant de convertir les signaux répondant à la norme USB dans un protocole acceptable par la carte. Il est à noter que l'identification du type de carte, et par la même de ses capacités de communication se fait par les voies traditionnelles dont la norme est bien définie. Ces voies peuvent être soit du type ISO 7816 (galvanique), soit du type ISO 14443 (voie électromagnétique).

Selon une forme particulière de lecteur, le module d'extraction et d'injection FF est placé dans le lecteur. Ainsi, tout le flux peut arriver par la voie rapide par exemple, par l'interface USB et c'est dans le lecteur que sera faite la reconnaissance des messages d'administration. Ces derniers seront envoyés par le canal traditionnel à la carte à puce.

## Revendications

1. Carte à puce comportant une rosace de huit contacts selon la norme ISO 7816 et comprenant une unité centrale (CPU) reliée à un premier bus (STB), au moins une voie bidirectionnelle standard (A), un canal série à haute vitesse (DP,FF) relié à des contacts (4, 8) non utilisés par la voie bidirectionnelle standard, **ledit** canal série à haute vitesse **étant** connecté à un deuxième bus (HSB), une pluralité de modules d'encryptage/décryptage (IDEA,FPLA) réliés par le deuxième bus (HSB), lesdits modules d'encryptage/décryptage étant également reliés au premier bus (STB) à l'unité centrale (CPU), **caractérisée en ce qu'**elle comprend un module de multiplexage (MUX) reliant lesdits modules d'encryptage/décryptage au canal série à haute vitesse, ledit module de multiplexage (MUX) étant relié au deuxième bus (HSB) et au premier bus (STB).

2. Carte à puce selon la revendication 1, **caractérisée en ce que** ces modules d'encryptage/décryptage sont de type tels que IDEA, AES, Hash, DES ou triple DES.

3. Carte à puce selon la revendication 1, **caractérisée en ce que** le module de multiplexage est connecté en étoile et permet de mettre en série plusieurs modules d'encryptage/décryptage.

4. Carte à puce selon les revendications 1 à 3, **caractérisée en ce qu'**elle comporte un module d'extraction et d'injection (FF) en charge de recevoir et de comparer les données du canal haute vitesse avec des valeurs prédéfinies et de transmettre les données reconnues à l'unité centrale (CPU).

5. Carte à puce selon la revendication 4, **caractérisée en ce que** le module d'extraction et d'injection (FF) comporte une entrée de données de contrôle et une mémoire tampon permettant d'insérer ces données dans le flux de données provenant du bus à haute vitesse (HSB).

6. Carte à puce selon l'une des revendications précédentes, **caractérisée en ce que** la voie bidirectionnelle standard est de type sans contact tel que selon ISO 14443.

## Patentansprüche

1. Chipkarte mit einer Rosette von acht Kontakten gemäss der Norm ISO 7816 und einer an eine erste Schiene (STB) angeschlossene Zentraleinheit (CPU), zumindest einem Standardduplexkanal (A), einem an durch den Standardduplexkanal nicht verwendete Kontakte (4, 8) angeschlossenen, schnellen seriellen Kanal (DP, FF), der an eine zweite Schiene (HSB) angeschlossen ist, und einer durch die zweite Schiene (HSB) miteinander verbundenen Mehrzahl von Ver- und Entschlüsselungsmodulen (IDEA, FPLA), die auch über die erste Schiene (STB) an die Zentraleinheit (CPU) angeschlossen sind, **dadurch gekennzeichnet, dass** sie einen Multiplexmodul (MUX) umfasst, der die Ver- und Entschlüsselungsmodule mit dem schnellen seriellen Kanal verbindet, wobei dieser Multiplexmodul (MUX) an die zweite Schiene (HSB) und an die erste Schiene (STB) angeschlossen ist.

2. Chipkarte nach Anspruch 1, **dadurch gekennzeichnet, dass** diese Ver- und Entschlüsselungsmodule Module von Typen wie IDEA, AES, Hash, DES oder Tripel-DES sind.

3. Chipkarte nach Anspruch 1, **dadurch gekennzeichnet, dass** der Multiplexmodul in Stemschaltung angeschlossen ist und es erlaubt, mehrere Ver- und Entschlüsselungsmodule in Reihe zu schliessen.

4. Chipkarte nach Ansprüchen 1 bis 3, **dadurch gekennzeichnet, dass** sie einen Modul für eine Entnahme und Einspeisung (FF) enthält, der die Aufgabe hat, vom schnellen Kanal Daten zu empfangen und mit vordefinierten Werten zu vergleichen und die erkannten Daten an die Zentraleinheit (CPU) zu übermitteln.

5. Chipkarte nach Anspruch 4, **dadurch gekennzeichnet, dass** der Modul für eine Entnahme und Einspeisung (FF) einen Eingang für Steuerdaten und einen Pufferspeicher enthält, der es erlaubt, diese Daten in den von der schnellen Schiene (HSB) kommenden Datenstrom einzufügen.

6. Chipkarte nach einem der vorangehenden Ansprüche, **dadurch gekennzeichnet, dass** der Standardduplexkanal vom berührungsfreien Typ wie gemäss ISO 14443 ist.

## Claims

1. Smart card including a eight contacts rosette according to ISO 7816 standards and comprising a central unit (CPU) linked to a first bus (STB), at least one standard bi-directional channel (A), a high speed serial channel (DP, FF) linked to contacts (4, 8) not used by the standard bi-directional channel, said high speed serial channel being connected to a second bus (HSB), a plurality of encryption / decryption modules (IDEA, FPLA) linked by the second bus (HSB), said encryption / decryption modules being also linked to the first bus (STB) to the central unit (CPU), **characterized in that** it comprises a multiplexing module (MUX) linking said encryption / decryption modules to the high speed serial channel, said multiplexing module (MUX) being linked to the second bus (HSB) and to the first bus (STB).

2. A smart card according to Claim 1, **characterized in that** these coding-decoding modules are of the type such as IDEA, AES, Hash, DES, or triple DES.

3. A smart card according to Claim 1, **characterized in that** the multiplexing module (MUX) is connected in star configuration and allows to serialize several coding-decoding modules.

4. A smart card according to Claims 1 to 3, **characterized in that** it comprises an extraction and injection module (FF) in charge of receiving and comparing the data of the high-speed channel with the predefined values and of transmitting the recognized data to the central unit (CPU).

5. A smart card according to Claim 4, **characterized in that** the extraction and injection module (FF) comprises an input of control data and a buffer memory allowing to insert these data in the data flow coming from the high-speed bus (HSB).

6. A smart card according to any of the preceding claims, **characterized in that** the standard bi-directional channel is of the contactless type according to ISO 14443.
